# EUROPEAN PATENT SPECIFICATION

(11) **EP 4 107 488 B1**
(45) Date of publication and mention of the grant of the patent: **28.10.2026**
(21) Application number: 21756931.8
(22) Date of filing: 18.02.2021
(51) Int. Cl.: G01V 8/20, G01D 5/32, G01D 5/34

(54) **MULTI-CHANNEL PROGRAMMABLE DETECTION SENSOR**
MEHRKANALIGER PROGRAMMIERBARER DETEKTIONSSENSOR
CAPTEUR PROGRAMMABLE À CANAUX MULTIPLES DE DÉTECTION

(30) Priority: 19.02.2020 US 202062978527 P
(43) Date of publication of application: 28.12.2022
(73) Proprietor: Photon Control Inc., Richmond BC V6V 1V2 (CA)
(72) Inventor: SYVENKYY, Yuriy, Richmond, British Columbia V6V 1V2 (CA)
(74) Representative: Noréns Patentbyrå AB
(86) International application number: PCT/CA2021/050174
(87) International publication number: WO 2021/163794

(56) References cited:
- JP-A- H06 177 738
- US-A- 5 281 810
- US-A- 5 281 810
- US-A1- 2016 178 794

## Description

### CROSS-REFERENCE TO RELATED APPLICATION(S)

This application claims priority to U.S. Provisional Patent Application No. 62/978,527 filed on February 19, 2020.

### TECHNICAL FIELD

The following relates generally to detection sensors and more particularly to a multi-channel programmable detection sensor that can be implemented on a single board, provide fast response time, and be compatible with thru-beam and reflective fiber optic sensors, for example in contrast applications.

### BACKGROUND

Object detection sensors, and particularly those based upon photoelectric principles, are well known, with several options being available. Such sensors are widely used in industry for a variety of measurement and control functions. An example of such uses is the detection of an object on a conveyor belt. The photoelectric sensor generates a modulated light beam that is periodically interrupted by the object to be detected. The sensor has a light receiving device, which receives the light that is returned to the sensor. The light returned to the sensor is a measure of the presence or absence of the target object. The sensor also includes circuitry which provides an electronic signal representing the light returned to the photosensor.

In a typical application when the object interrupts the light beam this may be referred to as the "target" state of the photosensor. When the light beam is uninterrupted the photosensor may be referred to as being in the "background" state. In other applications the two states may correspond to two targets each having a different reflectivity. There is a difference in the level or magnitude of the electrical signal generated by the photosensor in the target state when compared to the background state. This difference may be referred to as the "contrast". The photosensor also includes electronic circuitry for producing an output signal that may be used as a control signal. For example, the photosensor may be used to detect wafers during a wafer processing cycle with the output signal of the photosensor being used to detect when wafers pass.

The output of the photosensor changes when the detected light changes from the target state to the background state and vice versa. The signal level at which the output changes is referred to as the signal threshold. Generally, this threshold signal level is preset by the photosensor manufacturer.

Prior art detection sensors have been provided with mechanisms or devices to adjust the operational mode of the sensor as well as mechanisms to adjust certain operational parameters of the sensor. Among the characteristics that are adjustable in the prior art photosensors is the gain of the amplifier that amplifies or boosts the electronic signal that is generated as a result of the light that is returned to and received by the sensor.

In addition, the light source driving current can be adjusted to obtain the best detection conditions, increasing sensor dynamic range and increasing signal to noise ratio. Adjustment of the sensor operating modes and operational characteristics is required so that the user can establish proper signal amplification and output operations. Generally, in prior solutions, the sensors have been provided with a plurality of switches that are manually operable to set the various operational modes and characteristics of the sensor.

More recently, detection sensors have been available that have microcontrollers that are capable of automatically varying the amplifier gain, measuring the value of the electrical signal in both the target and background states at each gain level, comparing the differences in the signal at each gain level, and setting the amplifier gain for the particular application. An example of one such sensor is disclosed in U.S. Pat. No. 5,281,810. This type of sensor is particularly useful when the signal difference between the target and background conditions is relatively small. These types of applications are called low contrast applications which require careful amplifier gain adjustment so that the amplifier does not saturate. This also enables the contrast or difference between the two conditions to be maximized. In this new generation of sensor there is typically a manual override so that the operator can adjust the gain to a setting that maximizes the excess gain performance of the sensor when the user determines that the conditions require or will allow a maximum gain setting. This new generation of sensor also typically has multiple switch devices to set the various operating parameters and operating modes of the sensor.

There has been continuing effort to reduce the size of detection sensors in order to minimize the space required for installation of them. As the sensor becomes smaller, the space available for switches and adjustment mechanisms is reduced. Thus, a system that enables multiple function programming of the sensor with minimal switching devices would be advantageous.

JPH06177738A discloses a plurality of light emitting elements, each of which is configured to perform a light projecting operation in response to a light projecting signal, and a light receiving element and a preamplifier for amplifying a light receiving output thereof. And a plurality of light receiving portions forming an optical axis, a selecting means for sequentially selecting and outputting light receiving signals output from the plurality of light receiving portions in synchronization with the light emitting signals, and light receiving via the selecting means. In a multi-optical axis photoelectric switch having a control means for detecting a light blocking state of the optical axis based on a light receiving signal input from a light receiving unit, a pulse signal applied to an input terminal provided corresponding to each of the light receiving units. An integrating circuit for integrating and a sensitivity adjusting unit provided corresponding to each of the integrating circuits and setting a light receiving sensitivity of a corresponding light receiving unit according to an integrated value thereof, wherein the control unit includes the plurality of integrating circuits. To the above A multi-optical axis photoelectric switch, which is configured to output a pulse signal based on the selection of the selecting means.

US20160178794A1 discloses a light curtain controller is provided that serially tunes or optimizes the operating margin of each channel during an initialization sequence. The controller measures and adjusts the operating margin for each emitter-receiver pair individually, such that the margin for each channel satisfies a defined optimization criterion. In this way, the light curtain's unique environmental and installation conditions are taken into account when tuning each channel. By individually tuning each emitter-receiver pair, the operating margin of each channel is set sufficiently high to ensure accurate object detection, while excessive margin is limited to prevent signal processing errors, such as those associated with adjacent-channel signal bleed-through, susceptibility to internal and external noise, etc.

It is an object of the following to address at least one of the above-mentioned drawbacks or disadvantages.

### SUMMARY

The following relates to an object detection sensor. Such sensors are commonly used in industrial and commercial applications to detect the presence, absence or condition of an object. In particular, the following relates to a detection sensor operating under photoelectric principles although other types of sensors, such as ultrasonic, are contemplated within its scope. More specifically, the following relates to an object detection sensor that may be easily and quickly programmed by the user to establish desired and optimum operational modes and parameters of the sensor. The invention is defined by the appended set of claims.

In one aspect, there is provided a detection sensor comprising an electronic board comprising a plurality of independent channels, each channel comprising an emitter and a detector, wherein each channel is programmable by a processor.

### BRIEF DESCRIPTION OF THE DRAWINGS

Embodiments will now be described with reference to the appended drawings wherein:
FIG. 1 is a schematic diagram of an optical sensing application.
FIG. 2 is a schematic diagram of a multi-channel sensing board.
FIG. 3 is a schematic diagram of an example of a microcontroller for the multi-channel sensing board.
FIG. 4 is a circuit schematic of an example of a DAC for the multi-channel sensing board.
FIG. 5 is a circuit schematic of an example of a control circuit (e.g. a light-emitting diode (LED) driving circuit) for the multi-channel sensing board.
FIG. 6 is a circuit schematic of an example of a light detection for the multi-channel sensing board.
FIG. 7 is a circuit schematic of an example of a signal amplification circuit for the multi-channel sensing board.

### DETAILED DESCRIPTION

The following provides a detection sensor with an emitter for generating a light signal intended to be blocked by or reflected from an object; and a detector for generating an electronic signal that represents the presence, absence or condition of the object based upon the signal (e.g., reflected/through light) returned to the sensor. A single board with multiple independent channels (each with an emitter and detector) provides multi-function programming of the sensor channels and generates a programming signal that is input to a processor. The processor is operatively connected to the emitter, detector, and a switching device for controlling one or more operational characteristics of the sensor in response to the programming signal.

The switching device may include a single switch such as a single manually operable push button or software controlled through a series of commands sent from an external device, such as a computer or microcontroller. The detector which generates the electronic signal further has a variable gain amplifier and the electronic signal has a first level representing a first state of the sensor and a second level representing a second state of the sensor. These two states correspond to what may be referred to as the target state and the background state, respectively. The processor compares the level of the electronic signal in the two states and provides a signal to adjust the gain of the variable gain amplifier to an optimum gain setting. The processor selects the gain setting to either maximize the low contrast gain or maximize the high excess gain performance of the sensor. The processor also establishes the sensor signal threshold and hysteresis values based on the comparison of the electronic signal in the two states.

In an implementation, there may be provided a photoelectric detection sensor with a light emitter to provide constant light signals that are intended to reflect from, or be blocked by, a target object. The sensor includes a photodetector to receive the returned light and an electronic circuit to generate a signal representing the returned light. The electronic circuit has at least two amplification stages with different amplification gains. A microcontroller can be used as the processor, with a digital to analog converter (DAC) to set an LED driving current that achieves satisfactory light conditions. The sensor can be provided with an LED for each independent channel, as well as two (or more) LEDs indicating system status.

The following system therefore provides a multi-functional detection sensor programmable by sending electrical signals to an onboard processor (e.g., microcontroller) or directly to the light source control circuit, to multiple photodetector signal amplification stages, and to a detector circuit, e.g., an analog comparator circuit.

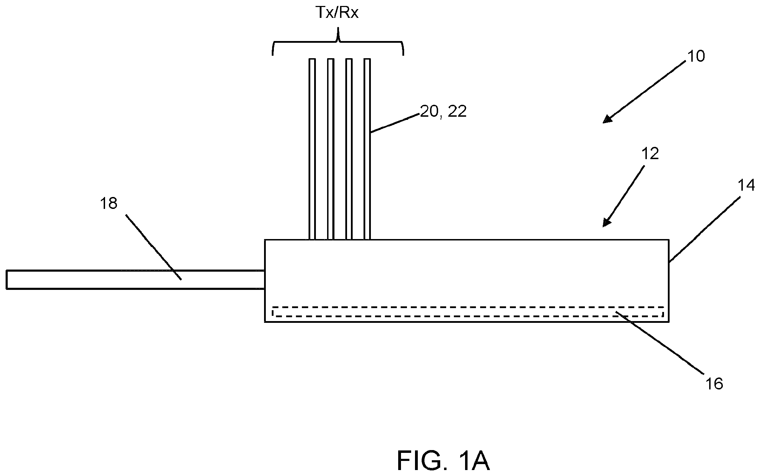

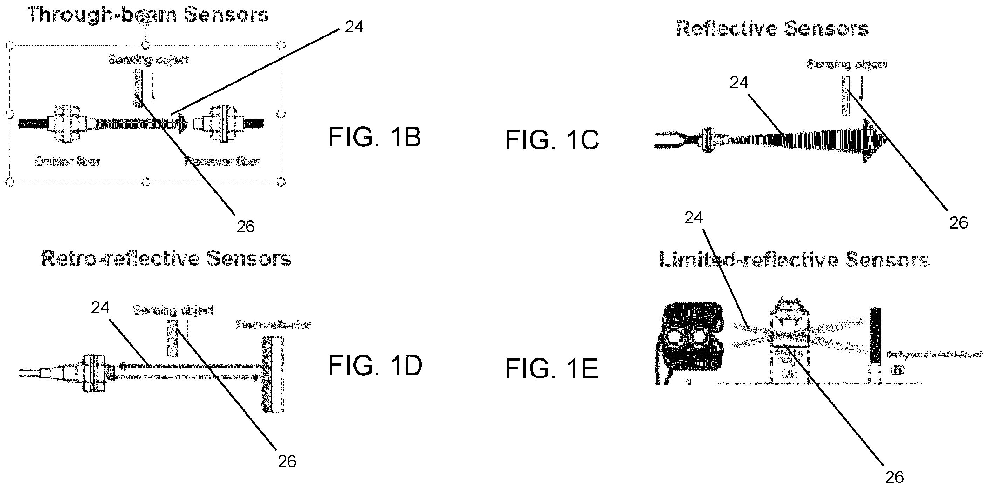

Turning now to the figures, FIG. 1A illustrates an example of an optical sensing application 10. The application 10 in this example uses a multi-channel programmable detection sensor 12 (or "multi-channel sensor" 12 for brevity) to detect the presence or absence of an object, to detect a difference in surface reflection or contrast between surface, or any other suitable optical sensing application. The multi-channel sensor 12 includes a housing 14 that contains an electronics board 16 that is used to generate a light source and detect a signal as explained above. The multi-channel sensor 12 in this example is connected to a control line 18 that can be used by an external computer or system (not shown) to operate the multi-channel sensor 12 and receive data therefrom. Setting thresholds using the control line 18 can be done using, for example, a tactile push button, a software interface or other switch. Fiber optic transmit cables 20 and fiber optic receive cables 22 may be fed into the housing 14 to connect to the electronics board 16 for providing source(s) of light and for receiving detected light. It can be appreciated that the housing 14 can include light insulating compartments to prevent light crosstalk between channels. The control line 18 can be provided using an interface electrical connector attached to the side of the housing 14. Various examples of the application 10 are shown in FIGS. 1B through 1E, e.g., a through-beam sensor (FIG. 1B), a reflective sensor (FIG. 1C), a retro-reflective sensor (FIG. 1D), and a limited-reflective sensor (FIG. 1E). In these cases, a sensing object 26 is moving relative to the sensor and thus can be detected by one or more light sources 24.

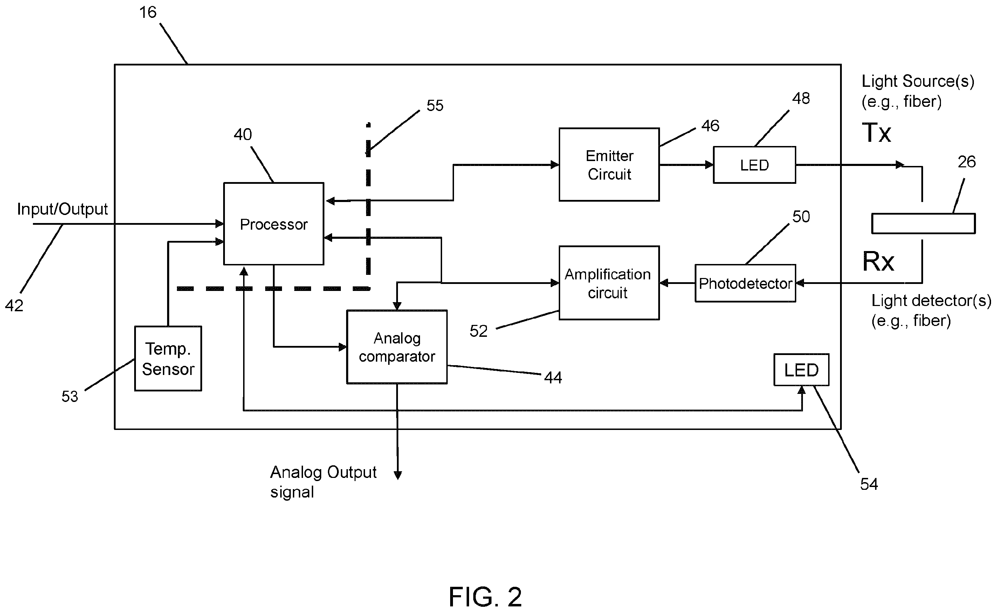

FIG. 2 provides an example of a configuration for the electronics board 16. In this example configuration, a processor 40, such as a microcontroller, is provided to set parameters and communicate with the external interface, such as via an input/output line 42. The processor 40 is coupled to an emitter circuit 46, an amplification circuit 52, an analog comparator 44, and a temperature sensor 53. The board 16 can include a switching device to select one or more channels. This switching device can be a separate device (not shown) or an interface 55 for all of the channels can connect directly to the controller (e.g., the processor 40) as shown in FIG. 2. The processor 40 in this example can perform the switching between channels using firmware. Each channel includes an input to the emitter circuit 46 that regulates the current through the LED 48 and thus the light intensity through the (e.g., fiber optic) light source cable(s) 20, to provide light source signal(s) 24 via LEDs 48 in this example. The light that is interrupted or reflected by the object 26 is transmitted through the (e.g., fiber optic) light receiving cable(s) 22 and then detected by a sensor 50, e.g., a photosensor or photodetector, which is fed to an amplification circuit 52. The amplification circuit 52 generates processed signals based on the detected light of the sensor 50. The amplification circuit 52 is also coupled to the processor 40 for providing feedback for adjusting the parameters of the board 16.

Referring to FIG. 2, the processor 40 can set the threshold and send this signal to the comparator 44. The signal from amplification circuit 52 is coupled to the comparator 44, where instant decisions can be made when an output signal is sent. This allows the sensor 12 to achieve a relatively fast response. Also, signals from the amplification circuit 52 are converted from analog to digital or fed to the processor 40, which can have this function built in for diagnostics, and a feedback loop for light intensity adjustment. The LED indicator lights 54 can be connected to the processor 40 and be turned on when the threshold is reached, and the output signal is generated, or the indictor LED 54 can be driven directly from the analog comparator circuit output.

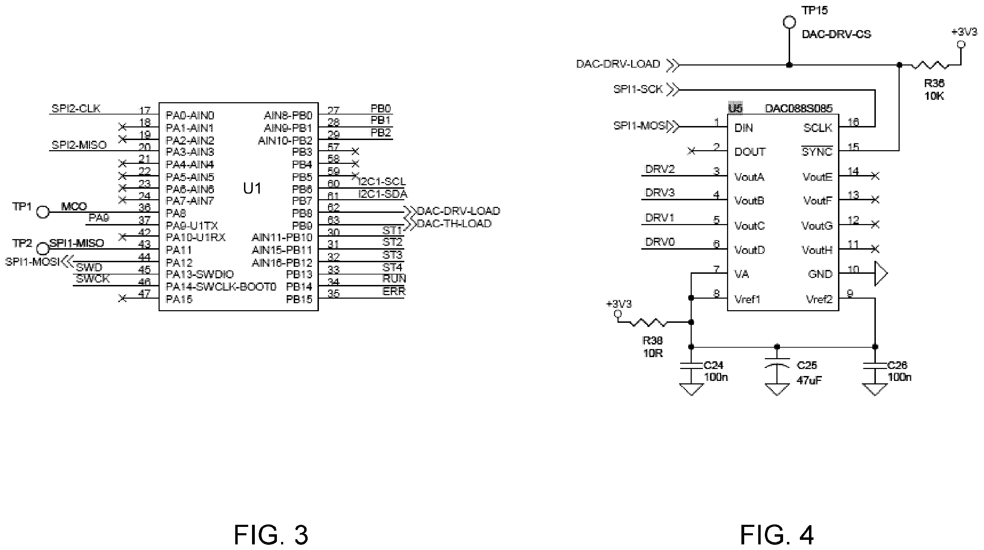

Referring now to the schematic diagrams in FIGS. 3-7, operation of the electronic board 16 in one example will be provided. The primary function of the processor 40 (e.g., using a microcontroller), is to set parameters and communicate with an external interface, as shown generally in FIG. 2.

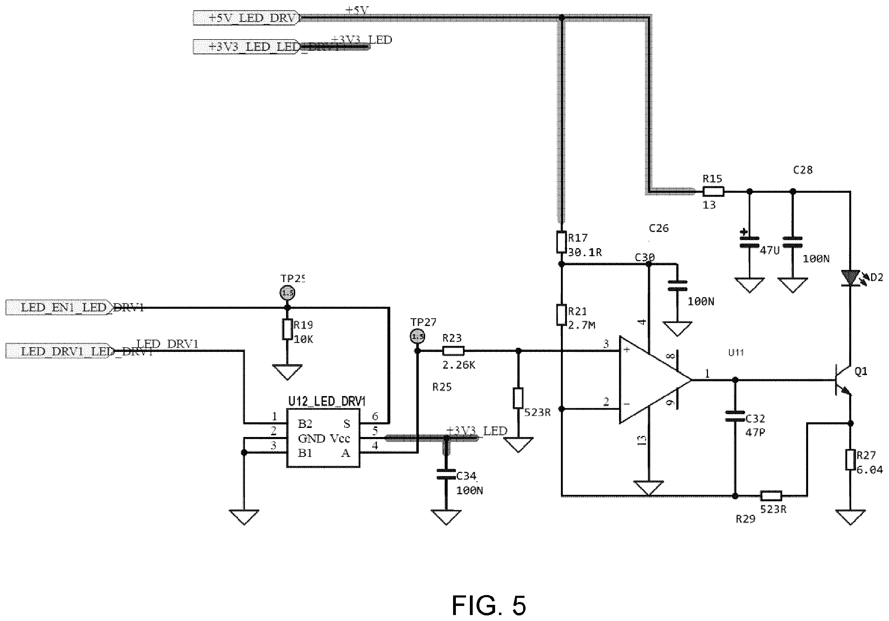

The DAC U5 (shown in FIG. 4) is controlled from the system microcontroller U1 (shown in FIG. 3) via a SPI bus to produce an output voltage proportional to the digital code and ranging between zero and +3.3VDC (in this example) with respect to system ground. This voltage is applied to the non-inverting input of the op-amp U11 (see FIG. 5 - where the same circuit can be used for each channel and an input signal connected to a single microcontroller) via analog switch U12_LED_DRV1 and voltage divider R23, R25. This causes the op-amp to force a stable DC current through the LED D2 such that a voltage drop on current-sensing resistor R27 is equal to the voltage at the non-inverting input of the op-amp. Thus, the DC current through the LED is controlled between zero and approximately 100mA in this example. Since light intensity of the LED is a linear function of the current, light output is controlled by the microcontroller U1. The U12 switch is used for turning the LED D2 on or off at very precise moments, as the LED_EN1 signal is connected to fast logic outputs from the microcontroller.

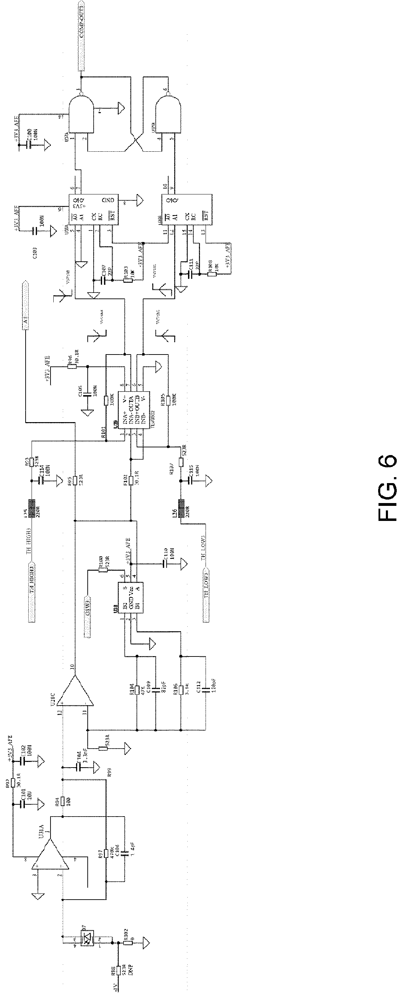

Light emitted by the LED is returned to the unit by way of an optical system and strikes the photodiode D7 (see FIG. 6), which produces a DC current proportional to its illumination level. This current is fed into the transimpedance amplifier U31A and converted to the DC voltage at the output (pin 1) of U31A. This voltage is filtered by the two pole low pass filter comprised of R97, C106, R94, and C104 and is fed into the voltage amplifier U28C, whose gain is determined by the feedback circuit R99, R104, R106. By switching the feedback resistors using analog switch U38, two different gain settings can be realized.

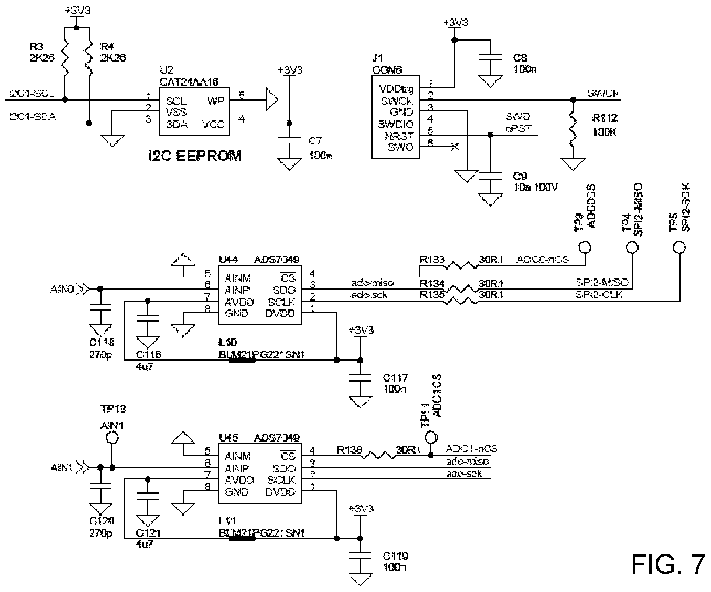

Voltage output of the amplifier is fed into the ADC U44 (see FIG. 7) and also applied to the inputs of the window comparator U39 (shown in FIG. 6). Outputs of the comparator feeding the monostable U36 inputs and the corresponding outputs are used as inputs for an RS bistable (U37). U36 and U37 are notable, since this circuit, in conjunction with manipulating the comparator threshold levels, can offer to the comparator output additional flexibility and noise immunity. The COMP-OUT signal is further used by the logic circuit to determine the state of the sensor.

The board 16 described herein therefore incorporates multi-channel sensors which allows these channels to share some common circuitry (i.e., power supply, processor, input and output mechanisms, board, enclosure) for several channels. When compared to an assembly of individual sensors, this can achieve a reduction of cost and space savings in a particular application 10.

Moreover, unlike existing solutions, the multi-channel sensor 12 uses unmodulated light, which achieves a potentially faster reaction time (thus increased timing resolution). This is because in a modulated system the ultimate timing resolution is typically limited by modulation frequency.

Using a DAC to adjust (potentially, dynamically) the intensity of emitted light signal allows compensation for varying optical path loss and helps providing the detection circuitry with optimal input signal level.

Splitting the received signal processing between the two amplifiers (one transimpedance amplifier and the other a voltage amplifier) achieves higher bandwidth (required for fine timing resolution) and better accuracy than would be possible with a single stage design using similar parts. The voltage amplifier also provides a convenient mechanism for gain adjustment.

Using a separate adjustment (i.e., the ADC + processor) and detection (hardware comparators and output logic) circuitry and methods for each channel achieves both convenience (including, potentially, a fully automatic drive level, amplification and detection thresholds setup) and high speed operation.

Using two different and adjustable detection thresholds (rising and falling) allows operation in widely varying conditions (e.g., fast and slowly moving targets). Comparators are generally used with fixed threshold hysteresis to avoid output chatter during slow changing input signals (and suppress noise to some extent), but the design described above provides fully adjustable thresholds coupled with edge-detection logic circuitry that enhances the performance.

Moreover, fully electronic controls (i.e., with no mechanical adjustments) allow for the minimization of the size of the sensor 12 and can improve its operational reliability.

The system described herein can also compensate for the effect of ambient temperature variation using firmware. Referring again to FIG. 6, due to ambient temperature changes, the LED light intensity as well as the D7 Photodiode dark current value will change. That, in effect, will translate into a modified voltage level at the output of the transimpedance amplifier U31A as the ambient temperature changes. The microcontroller, by monitoring the correspondingly proportional U28C output voltage, as well as the ambient temperature information from the temperature sensor 53 in FIG. 2 can adjust, accordingly, the current sent through the D2 LED in FIG 5., thus maintaining the accuracy of sensor state detection over the whole environmental temperature range.

For simplicity and clarity of illustration, where considered appropriate, reference numerals may be repeated among the figures to indicate corresponding or analogous elements. In addition, numerous specific details are set forth in order to provide a thorough understanding of the examples described herein. However, it will be understood by those of ordinary skill in the art that the examples described herein may be practiced without these specific details. In other instances, well-known methods, procedures and components have not been described in detail so as not to obscure the examples described herein. Also, the description is not to be considered as limiting the scope of the examples described herein.

It will be appreciated that the examples and corresponding diagrams used herein are for illustrative purposes only. Different configurations and terminology can be used without departing from the principles expressed herein. For instance, components and modules can be added, deleted, modified, or arranged with differing connections without departing from these principles.

It will also be appreciated that any module or component exemplified herein that executes instructions may include or otherwise have access to computer readable media such as storage media, computer storage media, or data storage devices (removable and/or non-removable) such as, for example, magnetic disks, optical disks, or tape. Computer storage media may include volatile and non-volatile, removable and non-removable media implemented in any method or technology for storage of information, such as computer readable instructions, data structures, program modules, or other data. Examples of computer storage media include RAM, ROM, EEPROM, flash memory or other memory technology, CD-ROM, digital versatile disks (DVD) or other optical storage, magnetic cassettes, magnetic tape, magnetic disk storage or other magnetic storage devices, or any other medium which can be used to store the desired information and which can be accessed by an application, module, or both. Any such computer storage media may be part of the sensor 14, any component of or related thereto, etc., or accessible or connectable thereto. Any application or module herein described may be implemented using computer readable/executable instructions that may be stored or otherwise held by such computer readable media.

The steps or operations in the flow charts and diagrams described herein are just for example. There may be many variations to these steps or operations without departing from the principles discussed above. For instance, the steps may be performed in a differing order, or steps may be added, deleted, or modified.

Although the above principles have been described with reference to certain specific examples, various modifications thereof will be apparent to those skilled in the art as outlined in the appended claims.

## Claims

1. A detection sensor (12), comprising:
an electronic board (16), the electronic board (16) comprising a processor (40), a switching device provided by the processor (40) or separately, and a plurality of independent channels operatively connected to the processor (40) and/or the switching device, each of the plurality of independent channels comprising an emitter (48) to provide a light source signal (24), and a detector (50) to process received light that is interrupted or reflected by an object (26) interacting with the light source signal (24),
wherein each of the plurality of independent channels is separately programmable by the processor (40), and
wherein the switching device is configured to control one or more operational characteristics of the detection sensor (12) in response to a programming signal input to the detection sensor (12),
**characterized in that**
the detection sensor (12) comprises a temperature sensor (53),
the electronic board (16) comprises at least one amplification circuit (52) to amplify a received signal generated from the received light, wherein the at least one amplification circuit (52) provides a feedback signal to the processor (40), wherein the received signal is split and processed by a pair of amplifiers, and wherein the at least one amplification circuit (52) comprises a transimpedance amplifier (U28A) and a voltage amplifier (U31C) for gain adjustment, and
the processor (40) is configured to monitor an output voltage of the transimpedance amplifier (U28A) and ambient temperature information from the temperature sensor (53) to adjust current sent through the emitter (48) to compensate for effects of ambient temperature variation.

2. The sensor of claim 1, wherein the electronic board (16) further comprises a comparator (44) to compare the received light to one or more sensor signal thresholds, wherein preferably the comparator (44) uses a plurality of different adjustable signal thresholds, and wherein more preferably comprises a plurality of different adjustable signal thresholds that comprise a rising threshold and a falling threshold.

3. The sensor of claim 1 or 2, wherein the emitter (48) comprises a light emitting diode "LED" (48).

4. The sensor of any one of claims 1 to 3, wherein the detector (50) comprises a photodetector.

5. The sensor of any one of claims 1 to 4, wherein the plurality of independent channels utilize unmodulated light.

6. The sensor of any one of claims 1 to 5, wherein the electronic board (16) further comprises a digital to analog converter (DAC) (U5) operatively coupled to the plurality of independent channels to adjust an intensity of the light source signal (24).

7. The sensor of claim 6 when dependent on claim 3, wherein the DAC (U5) is operatively coupled to an emitter circuit (46) to control the intensity of the light source signal (24).

8. The sensor of any one of claims 1 to 7, wherein the electronic board (16) comprises separate adjustment and detection circuitry for each of the plurality of independent channels.

9. A method of signal detection, comprising:
selecting one of a plurality of independent channels of a detection sensor (12), the detection sensor (12) comprising an electronic board (16), the electronic board (16) comprising a processor (40), a switching device provided by the processor (40) or separately, and the plurality of independent channels operatively connected to the processor (40) and/or the switching device, each of the plurality of independent channels comprising an emitter (48) to provide a light source signal (24), and a detector (50) to process received light that is interrupted or reflected by an object (26) interacting with the light source signal (24), wherein each of the plurality of independent channels is separately programmable by the processor (40), wherein the electronic board (16) comprises at least one amplification circuit (52), wherein the at least one amplification circuit (52) provides a feedback signal to the processor (40), wherein the received signal is split and processed by a pair of amplifiers, wherein the pair of amplifiers comprises using a transimpedance amplifier (U31A) and a voltage amplifier (U28C) for gain adjustment;
using the processor (40) and/or the switching device to control one or more operational characteristics of the detection sensor (12) in response to a programming signal input to the detection sensor (12);
providing the light source signal (24) using the emitter (48) of each of the plurality of independent channels; and
receiving and processing the received light,
**characterized by**
amplifying a received signal generated from the received light, and
monitoring, by the processor (40), an output voltage of the transimpedance amplifier (U28A) and the ambient temperature information from the temperature sensor (53) to adjust current sent through the emitter (48) to compensate for effects of ambient temperature variation.

10. The method of claim 9, wherein the electronic board (16) further comprises a comparator (44), the method further comprising comparing the received light to one or more sensor signal thresholds, wherein preferably the comparator (44) uses a plurality of different adjustable signal thresholds, wherein more preferably the plurality of different adjustable signal thresholds comprises a rising threshold and a falling threshold.

11. The method of claim 9 or 10, wherein the electronic board (16) further comprises a digital to analog converter (DAC) (U5) operatively coupled to the plurality of independent channels, the method further comprising adjusting an intensity of the light source signal (24) using the DAC (U5).

12. The method of claim 11 when dependent on claim 9, wherein the DAC (U5) is operatively coupled to an emitter circuit (46) to control the intensity of the light source signal (24).

## Patentansprüche

1. Erfassungssensor (12), umfassend:
eine Elektronikplatine (16), wobei die Elektronikplatine (16) einen Prozessor (40), eine vom Prozessor (40) bereitgestellte oder separat vorgesehene Schaltvorrichtung sowie eine Vielzahl unabhängiger Kanäle umfasst, die funktionsmäßig mit dem Prozessor (40) und/oder der Schaltvorrichtung verbunden sind, wobei jeder der Vielzahl unabhängiger Kanäle einen Emitter (48) zum Bereitstellen eines Lichtquellensignals (24) umfasst, sowie einen Detektor (50) zur Verarbeitung von empfangenem Licht, das von einem mit dem Lichtquellensignal (24) in Wechselwirkung stehenden Objekt (26) unterbrochen oder reflektiert wird,
wobei jeder der Vielzahl unabhängiger Kanäle durch den Prozessor (40) separat programmierbar ist, und
wobei die Schaltvorrichtung so konfiguriert ist, dass sie eine oder mehrere Betriebseigenschaften des Erfassungssensors (12) als Reaktion auf ein in den Erfassungssensor (12) eingegebenes Programmiersignal steuert,
**dadurch gekennzeichnet, dass**
der Erfassungssensor (12) einen Temperatursensor (53) umfasst,
die Elektronikplatine (16) mindestens eine Verstärkerschaltung (52) umfasst, um ein aus dem empfangenen Licht erzeugtes Empfangssignal zu verstärken, wobei die mindestens eine Verstärkerschaltung (52) ein Rückkopplungssignal an den Prozessor (40) liefert, wobei das Empfangssignal aufgeteilt und von einem Verstärkerpaar verarbeitet wird und wobei die mindestens eine Verstärkerschaltung (52) einen Transimpedanzverstärker (U28A) und einen Spannungsverstärker (U31C) zur Verstärkungsanpassung umfasst, und
der Prozessor (40) so konfiguriert ist, dass er eine Ausgangsspannung des Transimpedanzverstärkers (U28A) und Umgebungstemperaturdaten von dem Temperatursensor (53) überwacht, um den durch den Emitter (48) fließenden Strom anzupassen, um Auswirkungen von Umgebungstemperaturschwankungen zu kompensieren.

2. Sensor nach Anspruch 1, wobei die Elektronikplatine (16) ferner einen Komparator (44) umfasst, um das empfangene Licht mit einem oder mehreren Sensorsignalschwellenwerten zu vergleichen, wobei der Komparator (44) vorzugsweise eine Vielzahl verschiedener einstellbarer Signalschwellenwerte verwendet und wobei er noch bevorzugter eine Vielzahl verschiedener einstellbarer Signalschwellenwerte umfasst, die einen ansteigenden Schwellenwert und einen abfallenden Schwellenwert umfassen.

3. Sensor nach Anspruch 1 oder 2, wobei der Emitter (48) eine Leuchtdiode ("LED") (48) umfasst.

4. Sensor nach einem der Ansprüche 1 bis 3, wobei der Detektor (50) einen Fotodetektor umfasst.

5. Sensor nach einem der Ansprüche 1 bis 4, wobei die Vielzahl unabhängiger Kanäle unmoduliertes Licht nutzen.

6. Sensor nach einem der Ansprüche 1 bis 5, wobei die Elektronikplatine (16) ferner einen Digital-Analog-Wandler (DAC) (U5) umfasst, der funktionsmäßig mit der Vielzahl unabhängiger Kanäle gekoppelt ist, um eine Intensität des Lichtquellensignals (24) einzustellen.

7. Sensor nach Anspruch 6, sofern abhängig von Anspruch 3, wobei der DAC (U5) funktionsmäßig mit einer Emitterschaltung (46) gekoppelt ist, um die Intensität des Lichtquellensignals (24) zu steuern.

8. Sensor nach einem der Ansprüche 1 bis 7, wobei die Elektronikplatine (16) für jeden der Vielzahl unabhängiger Kanäle separate Einstell- und Erfassungsschaltungen umfasst.

9. Verfahren zur Signalerfassung, umfassend:
Auswählen eines aus einer Vielzahl unabhängiger Kanäle eines Erfassungssensors (12), wobei der Erfassungssensor (12) eine Elektronikplatine (16) umfasst, wobei die Elektronikplatine (16) einen Prozessor (40), eine vom Prozessor (40) bereitgestellte oder separat vorgesehene Schaltvorrichtung sowie die Vielzahl unabhängiger Kanäle umfasst, die funktionsmäßig mit dem Prozessor (40) und/oder der Schaltvorrichtung verbunden sind, wobei jeder der Vielzahl unabhängiger Kanäle einen Emitter (48) zum Bereitstellen eines Lichtquellensignals (24) umfasst, sowie einen Detektor (50) zur Verarbeitung von empfangenem Licht, das von einem mit dem Lichtquellensignal (24) in Wechselwirkung stehenden Objekt (26) unterbrochen oder reflektiert wird, wobei jeder der Vielzahl unabhängiger Kanäle durch den Prozessor (40) separat programmierbar ist, wobei die Elektronikplatine (16) mindestens eine Verstärkerschaltung (52) umfasst, wobei die mindestens eine Verstärkerschaltung (52) ein Rückkopplungssignal an den Prozessor (40) liefert, wobei das empfangene Signal aufgeteilt und von einem Verstärkerpaar verarbeitet wird, wobei das Verstärkerpaar einen Transimpedanzverstärker (U31A) und einen Spannungsverstärker (U28C) zur Verstärkungsanpassung umfasst;
Verwenden des Prozessors (40) und/oder der Schaltvorrichtung zum Steuern einer oder mehrerer Betriebseigenschaften des Erfassungssensors (12) als Reaktion auf ein in den Erfassungssensor (12) eingegebenes Programmiersignal;
Bereitstellen des Lichtquellensignals (24) unter Verwendung des Emitters (48) jedes der Vielzahl unabhängiger Kanäle; und
Empfangen und Verarbeiten des empfangenen Lichts,
**dadurch gekennzeichnet, dass**
ein aus dem empfangenen Licht erzeugtes Empfangssignal verstärkt wird und
der Prozessor (40) eine Ausgangsspannung des Transimpedanzverstärkers (U28A) und die Umgebungstemperaturdaten von dem Temperatursensor (53) überwacht, um den durch den Emitter (48) fließenden Strom so anzupassen, um Auswirkungen von Umgebungstemperaturschwankungen zu kompensieren.

10. Verfahren nach Anspruch 9, wobei die Elektronikplatine (16) ferner einen Komparator (44) umfasst, wobei das Verfahren ferner ein Vergleichen des empfangenen Lichts mit einem oder mehreren Sensorsignalschwellenwerten umfasst, wobei der Komparator (44) vorzugsweise eine Vielzahl verschiedener einstellbarer Signalschwellenwerte verwendet, wobei die Vielzahl verschiedener einstellbarer Signalschwellenwerte noch bevorzugter einen ansteigenden Schwellenwert und einen abfallenden Schwellenwert umfasst.

11. Verfahren nach Anspruch 9 oder 10, wobei die Elektronikplatine (16) ferner einen Digital-Analog-Wandler (DAC) (U5) umfasst, der funktionsmäßig mit der Vielzahl unabhängiger Kanäle gekoppelt ist, wobei das Verfahren ferner ein Einstellen einer Intensität des Lichtquellensignals (24) unter Verwendung des DAC (U5) umfasst.

12. Verfahren nach Anspruch 11, sofern abhängig von Anspruch 9, wobei der DAC (U5) funktionsmäßig mit einer Emitterschaltung (46) gekoppelt ist, um die Intensität des Lichtquellensignals (24) zu steuern.

## Revendications

1. Capteur de détection (12), comprenant :
une carte électronique (16), la carte électronique (16) comprenant un processeur (40), un dispositif de commutation fourni par le processeur (40) ou séparément et une pluralité de canaux indépendants connectés fonctionnellement au processeur (40) et/ou au dispositif de commutation, chaque canal de la pluralité de canaux indépendants comprenant un émetteur (48) destiné à fournir un signal de source lumineuse (24), et un détecteur (50) destiné à traiter une lumière reçue qui est interrompue ou réfléchie par un objet (26) interagissant avec le signal de source lumineuse (24),
dans lequel chaque canal de la pluralité de canaux indépendants est programmable séparément par le processeur (40), et
dans lequel le dispositif de commutation est configuré pour commander une ou plusieurs caractéristiques de fonctionnement du capteur de détection (12) en réponse à un signal de programmation entré dans le capteur de détection (12),
**caractérisé en ce que**
le capteur de détection (12) comprend un capteur de température (53),
la carte électronique (16) comprend au moins un circuit d'amplification (52) destiné à amplifier un signal reçu généré à partir de la lumière reçue, dans lequel l'au moins un circuit d'amplification (52) fournit un signal de rétroaction au processeur (40), dans lequel le signal reçu est divisé et traité par une paire d'amplificateurs, et dans lequel l'au moins un circuit d'amplification (52) comprend un amplificateur à transimpédance (U28A) et un amplificateur de tension (U31C) pour un réglage de gain, et
le processeur (40) est configuré pour surveiller une tension de sortie de l'amplificateur à transimpédance (U28A) et des informations de température ambiante provenant du capteur de température (53) afin de régler le courant envoyé à travers l'émetteur (48) pour compenser les effets d'une variation de température ambiante.

2. Capteur selon la revendication 1, dans lequel la carte électronique (16) comprend en outre un comparateur (44) destiné à comparer la lumière reçue avec un ou plusieurs seuils de signaux de capteur, dans lequel le comparateur (44) utilise de préférence une pluralité de seuils de signaux réglables différents, et comprend de manière davantage préférée une pluralité de seuils de signaux réglables différents qui comprennent un seuil montant et un seuil descendant.

3. Capteur selon la revendication 1 ou 2, dans lequel l'émetteur (48) comprend une diode électroluminescente « LED » (48).

4. Capteur selon l'une quelconque des revendications 1 à 3, dans lequel le détecteur (50) comprend un photodétecteur.

5. Capteur selon l'une quelconque des revendications 1 à 4, dans lequel la pluralité de canaux indépendants utilise une lumière non modulée.

6. Capteur selon l'une quelconque des revendications 1 à 5, dans lequel la carte électronique (16) comprend en outre un convertisseur numérique-analogique (DAC) (U5) couplé fonctionnellement à la pluralité de canaux indépendants pour régler une intensité du signal de source lumineuse (24).

7. Capteur selon la revendication 6 lorsqu'elle dépend de la revendication 3, dans lequel le DAC (U5) est couplé fonctionnellement à un circuit d'émetteur (46) pour commander l'intensité du signal de source lumineuse (24).

8. Capteur selon l'une quelconque des revendications 1 à 7, dans lequel la carte électronique (16) comprend une circuiterie de réglage et de détection séparée pour chaque canal de la pluralité de canaux indépendants.

9. Procédé de détection de signaux, comprenant les étapes suivantes :
sélectionner un canal d'une pluralité de canaux indépendants d'un capteur de détection (12), le capteur de détection (12) comprenant une carte électronique (16), la carte électronique (16) comprenant un processeur (40), un dispositif de commutation fourni par le processeur (40) ou séparément, et la pluralité de canaux indépendants connectés fonctionnellement au processeur (40) et/ou au dispositif de commutation, chaque canal de la pluralité de canaux indépendants comprenant un émetteur (48) destiné à fournir un signal de source lumineuse (24), et un détecteur (50) destiné à traiter une lumière reçue qui est interrompue ou réfléchie par un objet (26) interagissant avec le signal de source lumineuse (24), dans lequel chaque canal de la pluralité de canaux indépendants est programmable séparément par le processeur (40), dans lequel la carte électronique (16) comprend au moins un circuit d'amplification (52), dans lequel l'au moins un circuit d'amplification (52) fournit un signal de rétroaction au processeur (40), dans lequel le signal reçu est divisé et traité par une paire d'amplificateurs, dans lequel la paire d'amplificateurs comprend l'utilisation d'un amplificateur à transimpédance (U28A) et d'un amplificateur de tension (U31C) pour un réglage de gain ;
utiliser le processeur (40) et/ou le dispositif de commutation pour commander une ou plusieurs caractéristiques de fonctionnement du capteur de détection (12) en réponse à un signal de programmation entré dans le capteur de détection (12) ;
fournir le signal de source lumineuse (24) en utilisant l'émetteur (48) de chaque canal de la pluralité de canaux indépendants ; et
recevoir et traiter la lumière reçue,
**caractérisé par**
l'amplification d'un signal reçu généré à partir de la lumière reçue, et
la surveillance par le processeur (40) d'une tension de sortie de l'amplificateur à transimpédance (U28A) et des informations de température ambiante provenant du capteur de température (53) afin de régler le courant envoyé à travers l'émetteur (48) pour compenser les effets d'une variation de température ambiante.

10. Procédé selon la revendication 9, dans lequel la carte électronique (16) comprend en outre un comparateur (44), le procédé comprenant en outre la comparaison de la lumière reçue avec un ou plusieurs seuils de signaux de capteur, dans lequel le comparateur (44) utilise de préférence une pluralité de seuils de signaux réglables différents, de manière davantage préférée dans lequel la pluralité de seuils de signaux réglables différents comprend un seuil montant et un seuil descendant.

11. Procédé selon la revendication 9 ou 10, dans lequel la carte électronique (16) comprend en outre un convertisseur numérique-analogique (DAC) (U5) couplé fonctionnellement à la pluralité de canaux indépendants, le procédé comprenant en outre le réglage d'une intensité du signal de source lumineuse (24) en utilisant le DAC (U5).

12. Procédé selon la revendication 11 lorsqu'elle dépend de la revendication 9, dans lequel le DAC (U5) est couplé fonctionnellement à un circuit d'émetteur (46) pour commander l'intensité du signal de source lumineuse (24).
